# EUROPEAN PATENT APPLICATION

(11) **EP 4 201 984 A1**
(43) Date of publication of application: **28.06.2023**
(21) Application number: 22187162.7
(22) Date of filing: 27.07.2022
(51) Int. Cl.: C08J 7/04, G02B 1/14, G02B 5/28

(54) **REFLECTIVE HEAT SHIELDING AND INSULATING FILM AND FABRICATION METHOD FOR THE SAME**

(30) Priority: 21.12.2021 KR 20210183882
(71) Applicant: Msway Technology Co., Ltd., Seoul 08380 (KR)
(72) Inventor: LEE, Min Soo, 06709 Seoul (KR); PARK, Jong Chun, 14025 Gyeonggi-do (KR)
(74) Representative: Schmitt-Nilson Schraud Waibel Wohlfrom Patentanwälte Partnerschaft mbB

(57) **Abstract**

Reflective heat shielding and insulating film comprising a base; a hard coating layer comprising photo-curing oligomer disposed over the base; a metal layer disposed over the hard coating layer; blocking layers comprising an oxide or a nitride of Cu, Nb, Sn, Ti, Zn or Al disposed over and under the metal layer, respectively; infrared reflective layers comprising ITO, IZO, ZTO, ZIST or ZIS disposed over and under the blocking layers, respectively; and a functional layer comprising photo-curing oligomer disposed over the upper infrared reflective layer.

## Description

### BACKGROUND OF THE INVENTION

### Field of the Invention

The present disclosure relates to a reflective heat shielding and insulating film and a fabrication method for the same.

### Description of the Related Art

A window film is an attachable material that is used to adjust transparency and the degree of inflow heat by absorbing or reflecting a portion of light that flows inside through a window.

For example, a window film blocks solar heat that flows inside through a window in the summer season, and reduces heating heat that leaks through a window in the winter season, thereby being able to reduce cooling/heating loads. Accordingly, a pleasant environment can be provided, energy and electricity can be saved, and an effect of blocking ultraviolet light can also be provided.

In particular, a home window film has high insulation performance and high transmittance for visible light like it is not applied, so it can be evaluated as a film having excellent performance of providing an effect of natural lighting.

It is an important characteristic for a window film to block heat from the outside in the summer season and prevent leakage of heat in the winter season. An infrared reflective film includes a reflective layer that can reflect infrared light and an absorption type film includes a substance layer that can absorb visible light or infrared light, or both of them.

However, such an absorption type film has a defect that when the film continuously absorbs heat, the temperature of the film increases and the film may be torn due to heat. In this respect, an infrared reflective film is better than an absorption type film.

### SUMMARY OF THE INVENTION

An objective of the present disclosure is to provide a reflective heat shielding and insulating film having an improved lighting effect by effectively block inflow heat or outflow heat and suppressing reflection in a visible light region, and a fabrication method for the reflective heat shielding and insulating film.

In order to achieve the objectives, a reflective heat shielding and insulating film according to an embodiment of the present disclosure comprising: a base; a hard coating layer disposed over the base; a metal layer disposed over the hard coating layer; blocking layers disposed over and under the metal layer, respectively; infrared reflective layers disposed over and under the blocking layers, respectively; and a functional layer disposed over the upper one of the infrared reflective layer, in which the blocking layers may comprise an oxide or a nitride including at least any one of Cu, Nb, Sn, Ti, Zn, and Al, and the infrared reflective layers may comprise any one of ITO, IZO, ZTO, ZIST, and ZIS.

In an embodiment of the present disclosure, the metal layer may be an alloy including Ag as a main constituent and added with at least one of niobium (Nb) and gold (Au).

In an embodiment of the present disclosure, the reflective heat shielding and insulating film may further comprise an index matching layer formed between and the hard coating layer and having a medium and a thickness selected for determining transmittance of the entire film.

In an embodiment of the present disclosure, the base may be formed in 50µm using PET.

In an embodiment of the present disclosure, the base may be formed in 50µm using PET, the hard coating layer may be formed in 50µm using an acrylate-based or silicon-based substance, the infrared reflective layers each may be formed in 40nm using IZO, the blocking layers each may be formed in 5nm using CuOx, the metal layer may be formed in 15nm, and the functional layer may be formed in 50nm using silicon-based resin.

In an embodiment of the present disclosure, the metal layer may comprise silver (Ag) of 89.5 at% to 96.5 at%, niobium (Nb) of 0.5 at% to 1.5 at%, and gold (Au) of 3.0 at% to 9.0 at%.

The film of the present disclosure is attached to a glass window, etc. in use, thereby providing an effect that it is possible to effectively block heat flowing into the interior and heat being discharged to the outside and to improve lighting performance by suppressing reflection in a visible light region.

### BRIEF DESCRIPTION OF THE DRAWINGS

The above and other objectives, features and other advantages of the present invention will be more clearly understood from the following detailed description when taken in conjunction with the accompanying drawings, in which:
FIG. 1 shows a reflective heat shielding and insulating film according to an embodiment of the present disclosure; and
FIG. 2 shows a fabrication method for the reflective heat shielding and insulating film according to an embodiment of the present disclosure.

### DETAILED DESCRIPTION OF THE INVENTION

The present disclosure may be modified in various ways and implemented by various exemplary embodiments, so that specific exemplary embodiments are shown in the drawings and will be described in detail herein. However, it is to be understood that the present disclosure is not limited to the specific exemplary embodiments, but includes all modifications, equivalents, and substitutions included in the spirit and the scope of the present disclosure.

In description of the present disclosure, detailed descriptions of well-known technologies will be omitted not to obscure the description of the present disclosure with unnecessary details.

Hereafter, an embodiment of the present disclosure is described in detail with reference to the accompanying drawings.

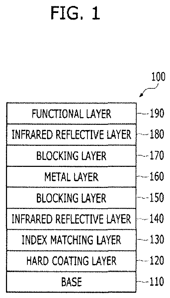

FIG. 1 shows a reflective heat shielding and insulating film 100 according to an embodiment of the present disclosure.

Referring to FIG. 1, a reflective heat shielding and insulating film 100 according to an embodiment of the present disclosure comprises: a base 110, a hard coating layer 120, an index matching layer 130, infrared reflective layers 140 and 180, blocking layers 150 and 170, a metal layer 160, and a functional layer 190.

The base 110 may comprise an inorganic substance or an organic substance.

The inorganic substance may be any one of glass, uartz, Al2O3, SiC, Si, GaAs, and InP, or a combination thereof, and is not limited thereto.

The organic substance may be selected from kapton foil, polyimide (PI), polyethersulfone (PES), polyacrylate (PAR), polyetherimide (PEI), polyethylene naphthalate (PEN), polyethyleneterephthalate (PET), polyphenylene sulfide (PPS), polyarylate, polycarbonate (PC), cellulose triacetate (CTA), cellulose acetate propionate (CAP), but is not limited thereto.

However, since the present disclosure intends to achieve low resistance and high light transmissivity, it is preferable to select the base 110 in consideration of appropriate thickness, index, etc.

The base 110 according to an embodiment of the present disclosure includes polyethyleneterephthalate (PET).

The hard coating layer 120 may be formed on the base 110.

The hard coating layer 120 may be made of a photo-curing type composite. The photo-curing composite is a composite of which is cured by electromagnetic waves. The electromagnetic wave is used as a general term of particle beams such as microwaves, infrared light (IR), ultraviolet light (UV), an X-ray, a γ-ray or an α-particle beam, a proton beam, a neutronbeam, and an electron beam.

The composite for forming the hard coating layer 120 may include photo-curing oligomer. As the photo-curing oligomer, oligomer constituents that are used to produce photo-curing (e.g., UV curing0 composites in the field may be freely used. For example, the oligomer may be: urethane acrylate obtained by reaction of polyisocyanate having two or more isocyanate groups in the molecule and hydroxyalkyl (meta) acrylate; ester-based acrylate obtained by dehydration reaction of polyester polyol and (meta) acryl acid; ester-based urethane acrylate obtained by reaction of hydroxyalkyl with ester-based urethane resin obtained by reaction polyester polyol and polyisocyanate; ester-based acrylate such as polyalkylene glycol di(meta) acrylate; ester-based urethane acrylate obtained by reaction of polyester polyol and (meta) acrylate and ester-based urethane resin obtained by reaction of polyester polyol and polyisocyanate; epoxy acrylate obtained by addition reaction of epoxy resin and (meta) acryl acid, or the like, but is not limited thereto.

In the present disclosure, acrylate oligomer having six to nine functional groups to satisfy properties required for the hard coating layer 120. Acrylate oligomer in which a reactive acryl group is bonded to an acrylate-based resin skeleton may be used as the acrylate oligomer, and any one of polyester acrylate, urethane acrylate, epoxy acrylate, and polyether acrylate may be used.

Further, a substance in which an acryl group is bonded to a rigid skeleton such as melanin or isocyanuric acid may be used for the hard coating layer 120.

In the present disclosure, urethane acrylate oligomer having six to nine functional groups is used as a binder to give properties required for the hard coating layer 120, whereby it is possible to increase hardness of the hard coating layer 120. When the functional groups of the urethane acrylate oligomer are less than 6, it is difficult to manufacture a product with high hardness, but when the functional groups exceed 9, although hardness is excellent, viscosity rapidly increases and photopolymerization (curing) is unstable, gelling of resin and contaminants in coating may be generated.

As for the urethane acrylate oligomer having six to nine functional groups, aromatic urethane acrylate oligomer has high curing speed, but may generate yellowing, so it is preferable to use urethane acrylate oligomer having six to nine aliphatic functional groups that do not generate yellowing.

However, when only the urethane acrylate oligomer having six to nine functional groups is used, a curing contraction ratio after hard coating increases, so curls get severe and flexibility of the hard coating layer is insufficient. Accordingly, there is a defect that the hard coating layer may break, light transmissivity that is an optical characteristic may decrease, and scratch resistance may be deteriorated.

The hard coating layer 120 may be formed in 3µm including an acrylate-based or silicon-based substance.

The index matching layer 130 is formed on the hard coating layer 120.

The index matching layer 130 may be introduced to optimize transmittance. The material (i.e., refractive index) and the thickness of the index matching layer 130 may be selected to achieve optimal transmittance under given conditions. For example, when the refractive index of the medium of each layer is high, a relatively low refractive index may be selected for the index matching layer 130.

This is because if a relatively high refractive index is selected for the medium of each layer, the reflectivity increases, and as a result, the transmittance may decrease. Accordingly, at least one of a material and a thickness of the index matching layer 130 may be selected to adjust the entire transmittance, as in the above example.

In an embodiment of the present disclosure, the index matching layer 130 may include a compound of a binary or more system having a refractive index over 2.0 such that transmittance is easily adjusted. For example, the index matching layer 130 may include any one of Nb2Ox, SiNx, SiOx, ZnO, AZO, TiOx, AiNx, WOx, ZTS, and ZIST. In this case, x may be any integer or real number. In this case, the visible light region may be light within a wavelength range of 380nm to 780nm.

The infrared reflective layers 140 and 180 are respectively formed over and under the blocking layers 150 and 170 formed over and under the metal layer 160, respectively.

In this case, the infrared region may be used as a meaning that includes near infrared light with wavelength of 780nm and 2,500nm and far infrared light with wavelength of 2.5µm to 25µm.

A compound of a ternary or more system may be used for the infrared reflective layers 140 and 180, and in this case, it may be preferable that the refractive index is high, but is lower than that of the index matching layer 130.

It is preferable that the infrared reflective layers 140 and 180 include a material that can prevent oxidation of the metal layer 160 of the materials described above.

The infrared reflective layers 140 and 180 may include any one selected from ITO, IZO, ZTO, ZIST, ZIT, and ZIS.

The infrared reflective layers 140 and 180 may be formed in a thickness of 5nm to 40nm. When the thickness of the infrared reflective layers 140 and 180 is less than 5nm, forming itself of a layer is difficult, so it is difficult to perform a capping function, but when the thickness exceeds 40nm, the optical characteristic is influenced, so there is a problem that the transmittance decreases and chrominance comes out of the center.

The blocking layers 150 and 170 are formed over and under the metal layer 160, respectively.

It is preferable that the blocking layers 150 and 170 include a material for suppressing migration of silver (Ag) included in the metal layer 160.

A compound of a binary or more system may be used for the blocking layers 150 and 170.

For example, the blocking layers 150 and 170 may include an oxide or a nitride including at least any one of Cu, Nb, Sn, Ti, Zn, and Al. The blocking layers 150 and 170 may include a single metal layer selected from a group of Cu, Nb, Sn, Ti, Zn, and Al.

The blocking layers 150 and 170 may be formed in a thickness of 2nm to 10nm. When the thickness of the blocking layers 150 and 170 is less than 2nm, deposition is not implemented well, so the layers are not formed in thin films, and accordingly, there is a problem that it is difficult to perform the capping function. Further, when the thickness exceeds 10nm, the optical characteristic is deteriorated, so there is a problem that the transmittance decreases.

The metal layer 160 is disposed between the blocking layers 150 and 170.

In an embodiment of the present disclosure, the metal layer 160 has silver (Ag) as a main constituent and may include an alloy added with at least one of niobium (Nb) and gold (Au).

Preferably, the metal layer 160 may include silver (Ag) of 89.5 at% to 96.5 at%, niobium (Nb) of 0.5 at% to 1.5 at%, and gold (Au) of 3.0 at% to 9.0 at%. However, the metal layer 160 may include metals such as Pd, Cu, Fe, Ni, Pb, Sn, Zn, Mg, Cd, C, and Ta as unavoidable constituents and the concentration may be 100mass ppm or less.

The concentration of oxygen unavoidably included in the metal layer 160 may be 1000mass ppm or less.

The functional layer 190 is formed over the infrared reflective layers 140 and 180 formed at the upper portion.

It is preferable to apply a material and thickness, which can uniformly perform a barrier function of protecting the infrared reflective layers 140 and 180 disposed at the lower portion and suppressing of migration of the metal layer 160 and a function of achieving matching of refractive indexes, to the functional layer 190.

Further, since the functional layer 190 has also a purpose of preventing damage due to external stimulation, it is also important to have contamination resistance and scratch resistance.

The composite for forming the functional layer 190 may include photo-curing oligomer. That is, the functional layer 190 may include oligomer or a monomer constituent in a cured state.

For example, the composite for forming the functional layer 190 may include phosphoric acid-based (meta) acrylate. The phosphoric acid-based (meta) acrylate may be a (meta) acrylate compound including at least one or more phosphoric acid groups, and for example, may include phosphate (meta) acrylate. When the phosphoric acid-based (meta) acrylate is used, it is possible to secure reliability including an attachment ability to the infrared reflective layers 140 and 180 and durability of the film.

The thickness of the functional layer 190 may be 100nm or less. When the thickness of the functional layer 190 exceeds 100nm, there may be a problem that the optical characteristic and insulation of the film are deteriorated, for example, a rainbow is observed on the outside of the film.

The functional layer 190 may be formed in 50nm using silicon-based resin.

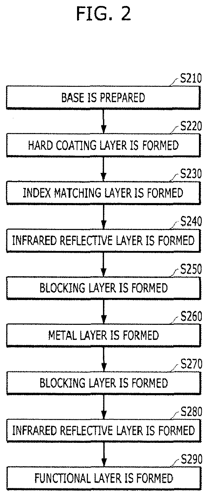

FIG. 2 shows a fabrication method for the reflective heat shielding and insulating film 100 according to an embodiment of the present disclosure.

Referring to FIG. 2, a base 110 is prepared in step S210.

The base 110 may include an inorganic substance or an organic substance and any one of the bases 110 of the example described above may be selected. The base 110 according to an embodiment of the present disclosure includes polyethyleneterephthalate (PET).

In step S220, a hard coating layer 120 is formed over the base 110.

The hard coating layer 120 may be made of the material of the hard coating layer 120 of the example described above. The hard coating layer 120 may be formed using any one composite of the example described above through wet coating such as spin coating, roll coating, spray coating, flow coating, inkjet printing, nozzle printing, deep coating, electrophoretic deposition, tape casting, screen printing, pad printing, doctor blade coating, gravure printing, gravure offset printing, and Langmuir-Blogett.

In step S230, an index matching layer 130 is formed over the hard coating layer 120.

As the index matching layer 130, any one of the index matching layers 130 of the example described above may be selected.

The index matching layer 130 may be formed over the hard coating layer 120 by preparing a solution related to a material that can achieve a desired refractive index and by performing any one selected from spin coating, roll coating, spray coating, flow coating, inkjet printing, nozzle printing, deep coating, electrophoretic deposition, tape casting, screen printing, pad printing, doctor blade coating, gravure printing, gravure offset printing, and Langmuir-Blogett.

In step S240, an infrared layer 140 is formed over the index matching layer 130.

The infrared reflective layer 140 may include any one selected from ITO, IZO, ZTO, ZIST, ZIT, and ZIS.

The infrared reflective layer 140 may be formed in a thickness of 5nm to 40nm.

In step S250, a blocking layer 150 is formed over the infrared reflective layer 140.

A compound of a binary or more system may be used for the blocking layer 150. For example, the blocking layer 150 may include an oxide or a nitride including at least any one of Cu, Nb, Sn, Ti, Zn, and Al. The blocking layer 150 may include a single metal layer selected from a group of Cu, Nb, Sn, Ti, Zn, and Al.

In step S260, a metal layer 160 is formed over the blocking layer 150.

The metal layer 160 may be determined as a sputtering target such that silver (Ag), niobium (Nb), and gold (Au) can be included at a desired ratio.

Preferably, the metal layer 160 may include silver (Ag) of 89.5 at% to 96.5 at%, niobium (Nb) of 0.5 at% to 1.5 at%, and gold (Au) of 3.0 at% to 9.0 at%. However, the metal layer 160 may include metals such as Pd, Cu, Fe, Ni, Pb, Sn, Zn, Mg, Cd, C, and Ta as unavoidable constituents of a sputtering target and the density may be 100mass ppm or less.

The concentration of oxygen unavoidably included in the metal layer 160 may be 1000mass ppm or less.

In step S270, a blocking layer 170 is formed over the metal layer 160.

The blocking layer 170 over the metal layer 160 may have the same substance and thickness as those of the blocking layer 150 under the metal layer 160, but the same substance and thickness are not necessarily required. The blocking layer 170 is selected within the substance and thickness range in the example described above, and a substance and a material that are different from those of the blocking layer 150 formed at the lower portion may be applied.

In step S280, an infrared reflective layer 180 is formed over the blocking layer 170.

The infrared reflective layer 180 over the metal layer 160 may have the same substance and thickness as those of the infrared reflective layer 180 under the metal layer 160, but the same substance and thickness are not necessarily required. The infrared reflective layer 180 is selected within the substance and thickness range in the example described above, and a substance and a material that are different from those of the infrared reflective layer 180 formed at the lower portion may be applied.

In step S290, a functional layer 190 is formed over the infrared reflective layer 180.

The composite for forming the functional layer 190 may include phosphoric acid-based (meta) acrylate. The phosphoric acid-based (meta) acrylate may be a (meta) acrylate compound including at least one or more phosphoric acid groups, and for example, may include phosphate (meta) acrylate. When the phosphoric acid-based (meta) acrylate is used, it is possible to secure reliability including an attachment ability to the infrared reflective layer 140 and durability of the film.

The functional layer 190 may be formed using a prepared composite through wet coating such as spin coating, roll coating, spray coating, flow coating, inkjet printing, nozzle printing, deep coating, electrophoretic deposition, tape casting, screen printing, pad printing, doctor blade coating, gravure printing, gravure offset printing, and Langmuir-Blogett.

The thickness of the functional layer 190 may be 100nm or less. When the thickness of the functional layer 190 exceeds 100nm, there may be a problem that the optical characteristic and insulation of the film are deteriorated, for example, a rainbow is observed on the outside of the film.

In an embodiment of the present disclosure, performance of a film fabricated in accordance with an embodiment of the present disclosure was evaluated by preparing two kinds of samples and measuring lighting performance, insulation, a heat blocking characteristic, etc.

Two kinds of embodiment conditions used for measurement are as follows, respectively.

### [Embodiment 1]

Base 110: PET, 50µm
Hard coating layer 120: formed using acrylate-based oligomer, 3µm
Index matching layer 130: Nb2Ox, 20nm
Infrared reflective layers 140 and 180: IZO, 40nm
Blocking layers 150 and 170: CuOx, 5nm
Metal layer 160: Ag alloy, 20nm
Functional layer 190: acrylate-based oligomer, 50nm

### [Embodiment 2]

Base 110: PET, 50µm
Hard coating layer 120: acrylate-based oligomer, 3µm
Index matching layer 130: Nb2Ox, 20nm
Infrared reflective layers 140 and 180: IZO, 40nm
Blocking layers 150 and 170: CuOx, 5nm
Metal layer 160: Ag alloy, 15nm
Functional layer 190: acrylate-based oligomer, 50nm

The result of measuring thermal and optical characteristics using the above embodiments is as the following Table 1.

**[Table 1]**

| Measurement items | Embodiment 1 | Embodiment 2 |
|---|---|---|
| Visible light transmissivity (%) | 73.1 | 82.0 |
| Visible light reflectivity (outdoor) (%) | 13.0 | 8.3 |
| Visible light reflectivity (indoor) (%) | 14.8 | 9.0 |
| Solar radiation transmittance (%) | 47.2 | 45.3 |
| Shading coefficient | 0.59 | 0.53 |
| Thermal transmittance | 3.6 | 3.6 |

In both of the embodiments, it could be seen that the visible light transmissivity was high and the reflectivity was low, but the solar radiation transmittance was the middle of 40%, so the blocking ratio of an infrared light region was high. Further, it could be seen that the thermal transmittance was the level of 3.6, so the insulation performance was very excellent. It could be seen in Embodiment 2 that the visible light transmissivity was higher and the reflectivity was low, so the lighting performance was excellent.

Terms used in the present specification are used only to describe specific exemplary embodiments rather than limiting the present disclosure. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

### [List of reference numerals]

110: BASE
120: HARD COATING LAYER
130: INDEX MATCHING LAYER
140, 180: INFRARED REFLECTIVE LAYER
150, 170: BLOCKING LAYER
160: METAL LAYER
190: FUNCTIONAL LAYER
S210: BASE IS PREPARED
S220: HARD COATING LAYER IS FORMED
S230: INDEX MATCHING LAYER IS FORMED
S240: INFRARED REFLECTIVE LAYER IS FORMED
S250: BLOCKING LAYER IS FORMED
S260: METAL LAYER IS FORMED
S270: BLOCKING LAYER IS FORMED
S280: INFRARED REFLECTIVE LAYER IS FORMED
S290: FUNCTIONAL LAYER IS FORMED

## Claims

1. A reflective heat shielding and insulating film comprising:
a base;
a hard coating layer disposed over the base;
a metal layer disposed over the hard coating layer;
blocking layers disposed over and under the metal layer, respectively;
infrared reflective layers disposed over and under the blocking layers, respectively; and
a functional layer disposed over the upper one of the infrared reflective layer,
wherein composites forming the hard coating layer and the functional layer comprise photo-curing oligomer,
the blocking layers comprise an oxide or a nitride including at least any one of Cu, Nb, Sn, Ti, Zn, and Al, and
the infrared reflective layers comprise any one of ITO, IZO, ZTO, ZIST, and ZIS.

2. The reflective heat shielding and insulating film of claim 1, wherein the metal layer is an alloy including Ag as a main constituent and added with at least one of niobium (Nb) and gold (Au).

3. The reflective heat shielding and insulating film any one of claims 1 and 2, further comprising an index matching layer formed between and the hard coating layer and having a medium and a thickness selected for determining transmittance of the entire film.

4. The reflective heat shielding and insulating film of any one of the preceding claims, wherein the base is formed in 50µm using PET,
the hard coating layer is formed in 50µm using an acrylate-based or silicon-based substance,
the infrared reflective layers are each formed in 40nm using IZO,
the blocking layers are each formed in 5nm using CuOx,
the metal layer is formed in 15nm, and
the functional layer is formed in 50nm using silicon-based resin.

5. The reflective heat shielding and insulating film of any one of the preceding claims, wherein the metal layer comprises silver (Ag) of 89.5 at% to 96.5 at%, niobium (Nb) of 0.5 at% to 1.5 at%, and gold (Au) of 3.0 at% to 9.0 at%.
